# EUROPÄISCHE PATENTANMELDUNG

(11) **EP 1 560 005 A1**
(43) Veröffentlichungstag der Anmeldung: **03.08.2005**
(21) Anmeldenummer: 04002251.9
(22) Anmeldetag: 02.02.2004
(51) Int. Cl.: G01H 1/00, G01H 9/00

(54) **Verfahren und Vorrichtung zum Ermitteln von Schwingungen an einem rotierenden Schaufelrad einer Turbine**

(71) Anmelder: SIEMENS AKTIENGESELLSCHAFT, 80333 München (DE)
(72) Erfinder: Maurus, Reinhold, 45279 Essen (DE); Woditschka, Frank, 47229 Duisburg (DE)

(57) **Zusammenfassung**

Das erfindungsgemäße Verfahren und die zugehörige Vorrichtung arbeiten mit einem Schaufelrad (22), an dem an mindestens einer Stelle eine lichtquantenemittierende Substanz (28) angeordnet ist, einer Strahlungsquelle (30), mit der Strahlung auf das rotierende Schaufelrad (22) und die daran angeordnete Substanz (28) ausgesendet werden kann, einem Sensor (38), mit dem an der Substanz (28) emittierte Lichtquanten ermittelt werden können und einer Auswerteschaltung (46), mit der das Signal des Sensors (38) zur Bestimmung des Schwingungsverhaltens des Schaufelrades (22) ausgewertet wird.

## Beschreibung

Die Erfindung betrifft ein Verfahren und eine Vorrichtung zum Ermitteln von Schwingungen an einem rotierenden Schaufelrad einer Turbine, wobei die Schwingungsmessung insbesondere berührungslos erfolgen soll.

An Schaufelrädern von Turbinen, beispielsweise stationären Gasturbinen, werden seit einigen Jahren erfolgreich berührungslose Schwingungsmessungen mit Hilfe von optischen oder induktiven Sensoren durchgeführt, die beim Passieren einzelner Schaufeln des Schaufelrades vor dem Sensor deutliche Signale liefern. Solche Schwingungsmessungen sind für die Überwachung und Gewährleistung eines sicheren Betriebs von Turbinen erforderlich.

Um bei Schaufelrädern mit großem Durchmesser die einzelnen Schaufeln vor frequenten Biegebelastungen zu schützen, werden nun vermehrt Schaufeln mit sogenannten integralen Deckplatten verwendet, die am Schaufelrad eine im Wesentlichen geschlossene Deckbandstruktur ergeben. An dieser geschlossenen Deckbandstruktur fehlen für optische oder induktive Sensoren jedoch Zielmarken, die eindeutige Signale für eine gesicherte Analyse des Schwingungsverhaltens des Schaufelrades liefern könnten. Es müssten daher geeignete Zielmarken mit definierter Anordnung an der geschlossenen Deckbandstruktur angebracht werden, aus deren Signalen das Schwingungsverhalten bestimmt werden könnte.

Im Falle von Gastrubinen kommt erschwerend hinzu, dass auch bei hohen lokal anfallenden Temperaturen zuverlässig gemessen werden muss. Aus diesem Grund können induktive Messverfahren und dafür erforderliche ferromagnetische Zielmarken wegen der Überschreitung der Curietemperatur nur bedingt genutzt werden.

Aus US 5 761,956 ist ein optisches Messverfahren zum Ermitteln von Schwingungen an einem rotierenden Schaufelrad einer Gasturbine bekannt, bei dem eine differente infrarote Wärmestrahlung von aufgebrachten keramischen Zielmarken zum Grundkörper des Schaufelrades detektiert wird. Dieses Messverfahren ist jedoch aufgrund der notwendigen hohen Temperaturen für die infrarote Wärmestrahlung erst nach gewisser Betriebsdauer der Gasturbine einsatzbereit. Während des Anfahrens der Gasturbine kann das Schwingungsverhalten jedoch nicht überwacht werden, was hinsichtlich der Betriebssicherheit der Gasturbine nachteilig ist.

Der Erfindung liegt die Aufgabe zugrunde ein Verfahren und eine Vorrichtung zum Ermitteln von Schwingungen an einem rotierenden Schaufelrad einer Turbine bereitzustellen, das eine sichere Bestimmung des Schwingungsverhaltens des Schaufelrades während nahezu allen Betriebszuständen der Turbine mit hoher Messsicherheit und hoher Messgenauigkeit ermöglicht.

Diese Aufgabe ist erfindungsgemäß mit einem Verfahren und einer Vorrichtung zum Ermitteln von Schwingungen an einem rotierenden Schaufelrad einer Turbine gelöst, bei dem an mindestens einer Stelle am Schaufelrad eine Lichtquanten emittierende Substanz angeordnet wird bzw. ist, mit einer Strahlungsquelle Strahlung auf das rotierende Schaufelrad und die daran angeordnete Substanz ausgesendet wird bzw. werden kann ein Sensor zum Ermitteln von an der Substanz emittierten Lichtquanten vorgesehen wird bzw. ist und mit einer Auswerteschaltung des Sensors das Signal ausgewertet wird bzw. werden kann, um das Schwingungsverhalten des Schaufelrades zu bestimmen.

Erfindungsgemäß wird zum Ermitteln von Schwingungen eines Schaufelrades einer Turbine der physikalische Effekt der Emission von Lichtquanten genutzt. Die Emission von Lichtquanten bei einer lichtquantenemittierenden Substanz ist die Folge eines dreistufigen Prozesses, der in den Atomen bzw. Molekülen der Substanz stattfindet. In einer ersten Stufe werden die Atome bzw. Moleküle der Substanz durch eine externe Strahlungsquelle, beispielsweise eine UV-Lichtquelle oder einen Laser, durch Absorption eines Strahlenquants (insbesondere eines Lichtquants) in einen höher energetischen Zustand gebracht. Durch ein Bewegen und durch Stöße der Atome bzw. Moleküle untereinander werden in einem zweiten Schritt verschiedene Energieniveaus angeregt, wodurch die Anregungsenergie geringfügig abnimmt. Nachfolgend kehrt das einzelne Atom bzw. Molekül in dem dritten Schritt in den Grundzustand zurück, wobei es ein Photon größerer Wellenlänge emittiert und es zu einer Frequenzverschiebung zwischen eingestrahltem und emittiertem Licht kommt.

Als Strahlungsquelle wird erfindungsgemäß beispielsweise eine langwellige UV-Lampe verwendet, die ein kurzwelliges Licht (λ = 350 nm) aussendet. Als lichtquantenemittierende Substanz werden z.B. Fluoreszenzpartikel verwendet, die das kurzwellige Licht absorbieren und Licht mit höheren Wellenlängen emittieren, die je nach Stoffeigenschaften üblicherweise zwischen 500 und 600 nm liegen. Den Fluoreszenzpartikeln kann beispielsweise ein keramischer Kleber oder ein Flamespray beigemengt sein, der dann auf dem Schaufelrad in Form von Zielmarken aufgebracht wird.

Mit dem erfindungsgemäßen berührungslosen Messverfahren können insbesondere an gebundenen Turbinenschaufeln mit einer umlaufenden, im Wesentlichen geschlossenen Deckbandstruktur des Schaufelrades Schwingungen sicher und genau gemessen werden. Das Messverfahren ist insbesondere für hohe Einsatztemperaturen geeignet und kann, daher sowohl in Gastrubinen als auch in Dampfturbinen genutzt werden. Die erfindungsgemäße Schwingungsüberwachung ist zu allen Betriebszuständen der jeweiligen Turbine möglich.

Wie bereits erwähnt ist das erfindungsgemäße Verfahren und die zugehörige Vorrichtung insbesondere vorteilhaft, wenn die Schaufeln des zu messenden Schaufelrades durch eine im Wesentlichen geschlossene Deckbandstruktur miteinander verbunden sind. Die erfindungsgemäßen Zielmarken aus einer lichtquantenemittierenden Substanz können dann vorteilhaft beispielsweise streifenförmig auf der Deckbandstruktur angebracht sein und dann als definierte Streifen bestehend aus einer dünnen Schicht lichtquantenemittierender Substanz als Zielmarke für einen Sensor dienen, der die von der Substanz emittierten Lichtquanten ermitteln kann. In einem solchen insbesondere optischen Aufnahmesensor werden die ermittelten Lichtquanten in elektrische Signale umgewandelt, die zur weiteren Verarbeitung und Analyse beispielsweise an einen Auswerterechner weitergeleitet werden. Schwingungen am Schaufelrad können dann erkannt werden, indem beispielsweise für eine einzelne Zielmarke eine bestimmte erwartete Ankunftszeit im Verhältnis zu der tatsächlichen Ankunftszeit gesetzt wird. Wenn die ermittelte Ankunftszeit einer Zielmarke früher oder später liegt, als die erwartete Ankunftszeit, liegen am Schaufelrad Vibrationen vor, d.h. die Deckbandstruktur ist von ihrer normalen Position aufgrund der Vibration geringfügig versetzt.

Diese Art der Messung und dieses erfindungsgemäße Vorgehen kann in gleicher Weise genutzt werden, um das Schwingungsverhalten mindestens einer Turbinenschaufel des Schaufelrades zu bestimmen. Die genannten erfindungsgemäßen Zielmarken sind in diesem Fall vorteilhaft an einzelnen umlaufenden Turbinenschaufeln des Schaufelrades angeordnet.

Als lichtquantenemittierende Substanz wird erfindungsgemäß vorteilhaft eine Fluoreszenz-, eine Phosphoreszenz-, eine Radiolumineszenz-, eine Thermolumineszenz-, eine Tribolumineszenz- und/oder eine Photolumineszenz-Substanz auf das Schaufelrad aufgebracht. Mit anderen Worten können erfindungsgemäß vorteilhaft all jene physikalischen Prozesse verwendet werden, bei denen von einer Substanz aufgrund einer Fremderregung Lichtquanten bzw. Strahlungsquanten emittiert werden.

Damit der erfindungsgemäß verwendete Sensor wie gewünscht im Wesentlichen nur die von der Substanz emittierten Lichtquanten ermittelt, kann vor diesem ein optischer Filter angeordnet sein, dessen spektrales Fenster an die Wellenlängen der emittierten Lichtquanten angepasst ist. Auf diese Weise kann das Sensorsignal von temperaturbedingter infraroter Hintergrundstrahlung und auch von an Metallflächen total reflektiertem Licht optisch getrennt werden.

Das Nutzsignal der erfindungsgemäß lichtquantenemittierenden Substanz besitzt eine relativ geringe Lichtintensität. Damit das Signal dennoch eindeutig zu erkennen ist, kann es mittels einer Verstärkungsschaltung, insbesondere mittels Photodioden bzw. Photomultiplieren zur weiteren Verwertung aufbereitet werden.

Nachfolgend wird ein Ausführungsbeispiel eines erfindungsgemäßen Verfahrens und einer Vorrichtung zum Ermitteln von Schwingungen an einem rotierenden Schaufelrad einer Turbine anhand der beigefügten schematischen Zeichnungen näher erläutert. Es zeigt:
- Fig. 1: einen Längsschnitt eines Ausführungsbeispiels einer Turbine mit einer erfindungsgemäßen Vorrichtung zum Ermitteln von Schwingungen an einem rotierenden Schaufelrad,
- Fig. 2: eine schematische Ansicht eines ersten Ausführungsbeispiels einer erfindungsgemäßen Vorrichtung zum Ermitteln von Schwingungen an einem rotierenden Schaufelrad einer Turbine gemäß Fig. 1, und
- Fig. 3: eine schematische Ansicht eines zweiten Ausführungsbeispiels einer erfindungsgemäßen Vorrichtung zum Ermitteln von Schwingungen an einem rotierenden Schaufelrad einer Turbine gemäß Fig. 1.

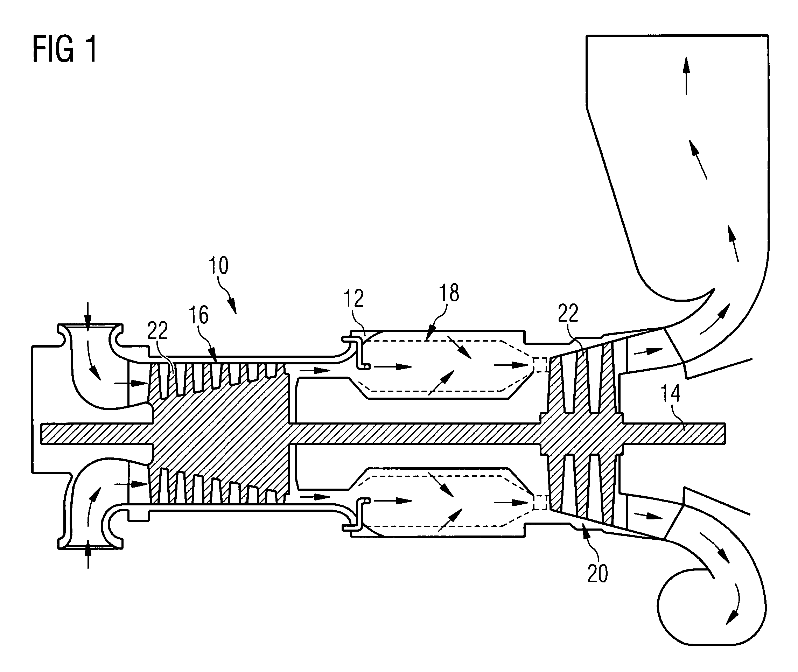

In Figur 1 ist eine als Gasturbine gestaltete Turbine 10 vereinfacht dargestellt, die als wesentliche Bauelemente einen Stator bzw. ein Gehäuse 12 und einen darin drehbar gelagerten Rotor bzw. Läufer 14 umfasst.

Die Turbine 10 ist im Wesentlichen in drei Abschnitte, einen Kompressorabschnitt 16, einen Brennerabschnitt 18 und einen Antriebsabschnitt 20 gegliedert. Im Kompressorabschnitt 16 und im Antriebsabschnitt 20 sind am Rotor 14 der Turbine 10 jeweils mehrere, in axialer Richtung aufeinander folgend angeordnete Schaufelräder 22 angeordnet.

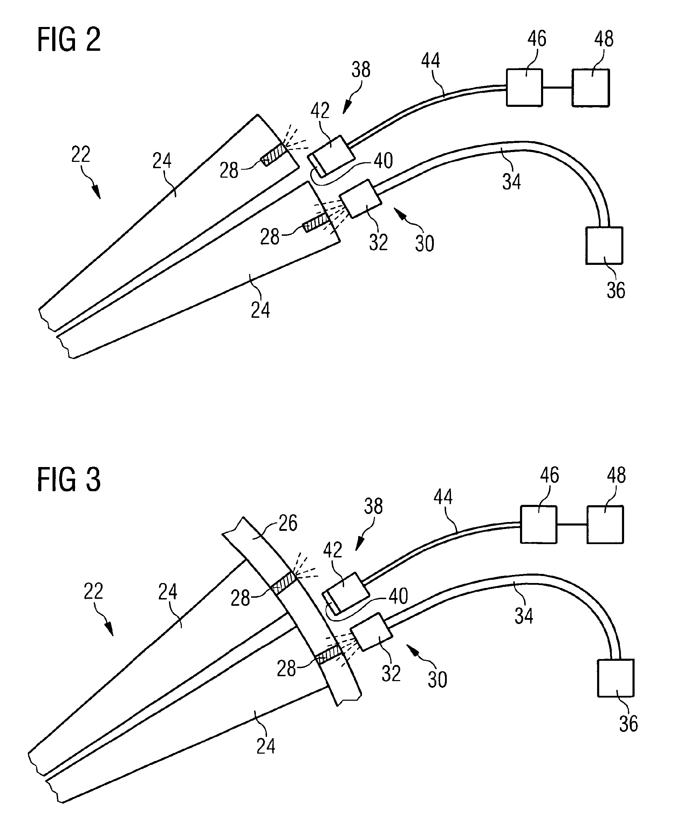

In den Figuren 2 und 3 ist jeweils ein Abschnitt eines solchen Schaufelrades 22 vereinfacht dargestellt.

Das in Figur 2 veranschaulichte Schaufelrad 22 umfasst eine Vielzahl Turbinenschaufeln 24, von der in Figur 2 zwei abschnittsweise dargestellt sind.

Bei dem in Figur 3 veranschaulichten Schaufelrad sind die radial äußeren Endbereiche der jeweiligen Turbinenschaufeln 24 durch eine sogenannte Deckbandstruktur 26 in Gestalt integraler Deckplatten der Turbinenschaufeln 24 miteinander verbunden.

Damit an der Turbine 10 das Schwingungsverhalten der darin rotierenden Schaufelräder 22 insbesondere auch bei dem im Antriebsabschnitt 20 vorherrschenden hohen Temperaturen mit hoher Genauigkeit und Sicherheit ermittelt werden kann, sind an der Turbine 10 mehrere Vorrichtungen zum Ermitteln von Schwingungen angeordnet, von denen ein erstes Ausführungsbeispiel in Figur 2 dargestellt und ein zweites Ausführungsbeispiel in Figur 3 veranschaulicht ist.

Diese erfindungsgemäßen Vorrichtungen zur Bestimmung des Schwingungsverhaltens des jeweils zugehörige Schaufelrades 22 basieren auf dem Prinzip der Fluoreszenz, Phosphoreszenz, Radiolumineszenz, Thermolumineszenz, Tribolumineszenz und/oder Photolumineszenz. Die Vorrichtungen umfassen jeweils einzelne Streifen 28 einer lichtquantenemittierenden Substanz, die bei dem in Figur 2 veranschaulichten Ausführungsbeispiel jeweils am radial äußeren Endbereich der einzelnen Turbinenschaufeln 24 in regelmäßigen Abständen angeordnet sind, während bei dem in Figur 3 veranschaulichten Ausführungsbeispiel diese Streifen 28 an der Deckbandstruktur 26 ausgebildet sind. Die lichtquantenemittierende Substanz der Streifen 28 ist beispielsweise mit keramischem Kleber auf den Turbinenschaufeln 24 bzw. der Deckbandstruktur 26 aufgebracht.

Gegenüberliegend von den Streifen 28 ist eine Strahlungsquelle 30 angeordnet, die eine Optik 32, einen Lichtleiter 34 und einen Strahlungserzeuger 36 umfasst. Die vom Strahlungserzeuger 36 erzeugte Strahlung, beispielsweise eine UV-Strahlung mit einer Wellenlänge von ca. 350 nm wird durch den Lichtleiter 34 zur Optik 32 geleitet und von dieser auf die mit dem jeweiligen Schaufelrad 22 umlaufenden Streifen 28 gerichtet.

Neben der Optik 32 ist ein Sensor 38 angeordnet, der als wesentliche Bauelemente einen optischen Filter 40, ein Empfangsmodul 42, einen elektrischen Leiter 44, einen Verstärker 46 und eine Auswerteschaltung 48 umfasst.

Aufgrund der von der Strahlungsquelle 30 erzeugten und ausgesandten UV-Strahlung emittiert die Substanz der Streifen 28 beispielsweise gemäß dem Prinzip der Fluoreszenz Licht mit vergleichsweise höheren Wellenlänge, die je nach Stoffeigenschaften der Substanz etwa zwischen 500 und 600 nm liegt. Dieses emittierte Licht kann durch den optischen Filter 40 durchtreten, wenn einer der Streifen 28 sich vor diesem vorbeibewegt. Idealerweise befinden sich dabei die Strahlenquelle 30 bzw. deren Optik 32 und der Sensor 38 bzw. dessen Filter 40 räumlich in unmittelbarer Nähe bzw. im selben Bereich. Die Fluoreszenenz findet nämlich in einem vergleichsweise kurzen Zeitbereich nach der Anregung statt. Ein längerer Zeitbereich kann mit dem Prinzip der Phosphoreszenz erzielt werden, so dass Sender und Empfänger auch räumlich (weiter) entfernt angeordnet sein können.

Das emittierte Licht gelangt zum Empfangsmodul 42, in dem es in ein elektrisches Signal gewandelt und dann durch den elektrischen Leiter 44 zum Verstärker 46 und schließlich zur Auswerteschaltung 48 gelangt. In der Auswerteschaltung 48 werden die aufgenommenen Signal zur weiteren Verarbeitung und zur Analyse des Schwingungsverhaltens des jeweiligen umlaufenden Schaufelrades 22 ausgewertet.

## Patentansprüche

1. Verfahren zum Ermitteln von Schwingungen an einem rotierenden Schaufelrad (22) einer Turbine (10), mit den Schritten:
Vorsehen einer lichtquantenemittierenden Substanz (28) an mindestens einer Stelle des Schaufelrades (22),
Aussenden von Strahlung mittels einer Strahlungsquelle (30) auf das rotierende Schaufelrad (22) und die daran angeordnete Substanz (28),
Ermitteln von an der Substanz (28) emittierten Lichtquanten mittels eines Sensors (38) und Auswerten des Signals des Sensors (38) zur Bestimmung des Schwingungsverhaltens des Schaufelrades (22).

2. Verfahren nach Anspruch 1,
**gekennzeichnet durch** die Schritte:
Vorsehen der lichtquantenemittierenden Substanz (28) an mindestens einer umlaufenden, im Wesentlichen geschlossenen Deckbandstruktur (26) des Schaufelrades (22) und
Auswerten des Signals des Sensors (38) zur Bestimmung des Schwingungsverhaltens der Deckbandstruktur (26).

3. Verfahren nach Anspruch 1 oder 2,
**gekennzeichnet durch** die Schritte:
Vorsehen der lichtquantenemittierenden Substanz (28) an mindestens einer umlaufenden Turbinenschaufel (24) des Schaufelrades (22) und
Auswerten des Signals des Sensors (38) zur Bestimmung des Schwingungsverhaltens der mindestens einen Turbinenschaufel (24).

4. Verfahren nach einem der Ansprüche 1 bis 3,
**dadurch gekennzeichnet,**
**dass** die lichtquantenemittierende Substanz (28) streifenförmig auf das Schaufelrad (22), die Deckbandstruktur (26) bzw. die mindestens eine Turbinenschaufel (24) aufgebracht wird.

5. Verfahren nach einem der Ansprüche 1 bis 4,
**dadurch gekennzeichnet,**
**dass** als lichtquantenemittierende Substanz (28) eine Fluoreszenz-, eine Phosphoreszenz-, eine Radiolumineszenz-, eine Thermolumineszenz-, eine Tribolumineszenz- und/oder eine Photolumineszenz-Substanz auf das Schaufelrad (22) aufgebracht und ein entsprechend sensitiver Sensor (38) zum Ermitteln von emittierten Lichtquanten verwendet wird.

6. Verfahren nach einem der Ansprüche 1 bis 5,
**dadurch gekennzeichnet,**
**dass** zwischen dem Schaufelrad (22) und dem Sensor (28) ein optischer Filter (40) angeordnet wird.

7. Verfahren nach einem der Ansprüche 1 bis 6, **dadurch gekennzeichnet, dass** das Signal des Sensors (38) vor dessen Auswertung, insbesondere mittels mindestens einer Photodiode bzw. einem Photomultiplier verstärkt wird.

8. Vorrichtung zum Ermitteln von Schwingungen an einem rotierenden Schaufelrad (22) einer Turbine (10), mit mindestens einer Stelle am Schaufelrad, an der eine lichtquantenemittierende Substanz (28) angeordnet ist,

9. einer Strahlungsquelle (30), mit der Strahlung auf das rotierende Schaufelrad (22) und die daran angeordnete Substanz (28) ausgesendet werden kann,
einem Sensor (38) zum Ermitteln von an der Substanz (28) emittierten Lichtquanten und einer Auswerteschaltung (48) zum Auswerten des Signals des Sensors (38) und zum Bestimmen des Schwingungsverhaltens des Schaufelrades (22).

10. Vorrichtung nach Anspruch 8,
**dadurch gekennzeichnet,**
**dass** die lichtquantenemittierende Substanz (28) an mindestens einer umlaufenden, im Wesentlichen geschlossenen Deckbandstruktur (26) des Schaufelrades (22) angebracht ist und
das Signal des Sensors (38) zur Bestimmung des Schwingungsverhaltens der Deckbandstruktur (26) ausgewertet werden kann.

11. Vorrichtung nach Anspruch 8 oder 9,
**dadurch gekennzeichnet,**
**dass** die lichtquantenemittierende Substanz (28) an mindestens einer umlaufenden Turbinenschaufel (24) des Schaufelrades (22) angebracht ist und
das Signal des Sensors (38) zur Bestimmung des Schwingungsverhaltens der mindestens einen Turbinenschaufel (24) ausgewertet werden kann.

12. Vorrichtung an einem der Ansprüche 8 bis 10,
**dadurch gekennzeichnet,**
**dass** die lichtquantenemittierende Substanz (28) streifenförmig auf das Schaufelrad (22), die Deckbandstruktur (26) bzw. die mindestens eine Turbinenschaufel (24) aufgebracht ist.

13. Vorrichtung nach einem der Ansprüche 8 bis 11,
**dadurch gekennzeichnet,**
**dass** die lichtquantenemittierende Substanz (28) eine Fluoreszenz-, eine Phosphoreszenz-, eine Radiolumineszenz-, eine Thermolumineszenz-, eine Tribolumineszenz- und/oder eine Photolumineszenz-Substanz und der Sensor (38) ein entsprechend sensitiver Sensor (38) zum Ermitteln von emittierten Lichtquanten ist.

14. Vorrichtung nach einem der Ansprüche 8 bis 12,
**dadurch gekennzeichnet,**
**dass** zwischen dem Schaufelrad (22) und dem Sensor (38) ein optischer Filter (40) angeordnet ist.

15. Vorrichtung nach einem der Ansprüche 8 bis 13,
**dadurch gekennzeichnet,**
**dass** eine Verstärkerschaltung (46) zum Verstärken des Signals des Sensors (38) vor dessen Auswertung vorgesehen ist, insbesondere in Gestalt einer Photodiode bzw. eines Photomultiplier.
